# EUROPEAN PATENT APPLICATION

(11) **EP 3 674 603 A1**
(43) Date of publication of application: **01.07.2020**
(21) Application number: 18425108.0
(22) Date of filing: 27.12.2018
(51) Int. Cl.: F21S 43/239, F21S 43/237, F21S 43/245, F21S 43/249, F21S 43/14, F21S 41/24, F21S 41/148, F21S 41/151, F21S 43/15, B60Q 1/26, B60Q 1/00, F21S 41/663, B60Q 3/64, B60Q 3/74, B60Q 3/80, B60Q 3/14, B60Q 3/18, F21V 8/00

(54) **LIGHTING AND/OR SIGNALING DEVICE FOR VEHICLES**

(71) Applicant: Marelli Automotive Lighting Italy S.p.A., 10078 Venaria Reale (TO) (IT)
(72) Inventor: Osadnik, Adam, I-10078 Venaria Reale, Torino (IT)
(74) Representative: Chimini, Francesco

(57) **Abstract**

The present invention relates to a lighting and/or signaling device 1 for motor vehicles, comprising: - at least one light guide 2 having a light extraction surface 21 and a light emission surface 22; - at least a first 11 and a second 12 light source which are structured so as to emit light when supplied with electric energy.

The first light source 11 faces a first light inlet surface 31 of the light guide so that the light emitted by the first light source penetrates the light guide through the first light inlet surface and then propagates with a first propagation orientation O1 inside the light guide while keeping the condition of total internal reflection between the light emission and light extraction surfaces. The second light source 12 faces a second light inlet surface 32 of the light guide so that the light emitted by the second light source penetrates the light guide through the second light inlet surface and then propagates with a second propagation orientation O2 inside the light guide while keeping the condition of total internal reflection between the light emission and light extraction surfaces.

The light extraction surface comprises: - at least a first plurality of light extractors 41, each of which is configured to extract, from the light guide, only light having said first propagation orientation O1, and - at least a second plurality of light extractors 42, each of which is configured to extract, from the light guide, only light having the second propagation orientation O2. The aforesaid at least two light sources are configured to be switched on independently of each other. The lighting and/or signaling device 1 comprises a control unit 50 configured to control the first and second light sources independently of each other according to predetermined switch-on sequences so as to generate an animated lighting effect on said light emission surface.

## Description

### FIELD OF APPLICATION

The present invention relates to a lighting and/or signaling device for vehicles.

### BACKGROUND ART

The term "lighting and/or signaling device for vehicles" generally means not only including devices positioned outside the vehicle, such as a rear automotive light, a front automotive light (also referred to as a headlight or lamp) or a lighting device of a back window, but also devices positioned inside the vehicle, such as for example a map light or a light of an instrument cluster.

In case of a (rear or front) automotive light, the lighting and/or signaling device comprises at least one external light of the vehicle having the function of lighting and/or signaling towards the outside of the vehicle, such as for example a position light, a turn signal light, a stop light, a rear fog light, a reverse light, a dipped-beam light, a high beam light and the like.

Typically, in its simplest abstraction, an automotive light comprises a container body, a lens body and at least one light source.

The lens body is arranged to close the mouth of the container body so as to form a housing chamber. The light source is arranged inside the housing chamber, which light source may be oriented so as to emit light towards the lens body when supplied with electric energy.

The light source typically used in automotive lights is a light-emitting diode (LED) which emits a light beam of adequate power, while keeping the electric consumption low and ensuring an increased duration.

The diodes in known solutions may be arranged close to a side edge of a light guide rod or a light guide plate so that it may diffuse the light beam emitted by the diode over the whole length thereof.

### OVERVIEW OF THE INVENTION

As is known, automotive lights increasingly are elements which characterize the manufacturer of the vehicle on which they are mounted. In this respect, the aesthetic characterization of a light is becoming significantly more important.

From this perspective, the trend has been established over the past few years to construct lights which are capable of generating animated lighting effects, typically defined by illuminations of parts of the light according to predefined time sequences.

Today, such animated effects may be obtained by means of light guides which face one another and are intended to be lit in an independent manner. An example of such a technical solution is described in international Patent Application No. WO2012/052946A1.

Such a technical solution allows also complex animated lighting effects to be obtained, but with the disadvantage of increasing the construction complexity, volumes and weight of the automotive light.

The need is therefore felt in the art to manufacture automotive lights, and in general lighting and/or signaling devices for vehicles, which allow animated lighting effects to be obtained in a simpler constructional manner, without particular disadvantages in terms of increase in weights and volumes.

Such needs are met by a lighting and/or signaling device for vehicles according to claim 1.

Other embodiments of the present invention are described in the dependent claims.

### DESCRIPTION OF THE DRAWINGS

Further features and advantages of the present invention will become more apparent from the following description of preferred non-limiting embodiments thereof, in which:
- Figure 1 depicts an exploded diagrammatic perspective view of a lighting/signaling device consisting of an automotive light according to a particular embodiment of the invention, which in particular provides a light guide with extractor elements consisting of incisions in the light extraction surface;
- Figure 2 shows a perspective view of the device in Figure 1, partially assembled;
- Figure 3 shows a front orthogonal view of the device in Figure 2;
- Figure 4 shows a sectional orthogonal view of the device shown in Figure 3, according to a sectional plane IV-IV indicated therein;
- Figure 5 shows a perspective detailed view of certain components of the device in Figure 3;
- Figure 6 shows a front orthogonal view of a lighting/signaling device consisting of an automotive light according to an alternative embodiment of the invention, which in particular provides a light guide with extraction elements consisting of protruding elements of the light extraction surface;
- Figure 7 shows a sectional orthogonal view of the device shown in Figure 6, according to a sectional plane VII-VII indicated therein;
- Figure 8 shows an example of optical pattern which may be obtained on the emitting surface of the light guide of a lighting/signaling device for vehicles according to the invention;
- Figures 9, 10 and 11 depict some diagrammatic views of the pattern of the light beams inside the device according to the invention; and
- Figure 12 shows a device according to an alternative embodiment of the invention.

The elements or parts of elements common to the embodiments described below will be indicated using the same numerals.

### DETAILED DESCRIPTION

With reference to the aforesaid drawings, a lighting and/or signaling device for vehicles according to the invention is indicated as a whole by numeral 1.

The term "lighting and/or signaling device for vehicles" within the scope of the present Patent Application generally means not only including lighting and/or signaling devices positioned outside the vehicle, such as a rear automotive light, a front automotive light or a lighting device of a back window, but also devices positioned inside the vehicle, such as for example a map light or light of an instrument cluster.

According to a general embodiment of the present invention, the lighting and/or signaling device 1 for motor vehicles comprises:
- at least one light guide 2 having a light extraction surface 21 and a light emission surface 22; and
- at least a first light source 11 and a second light source 12 which are structured so as to emit light when supplied with electric energy.

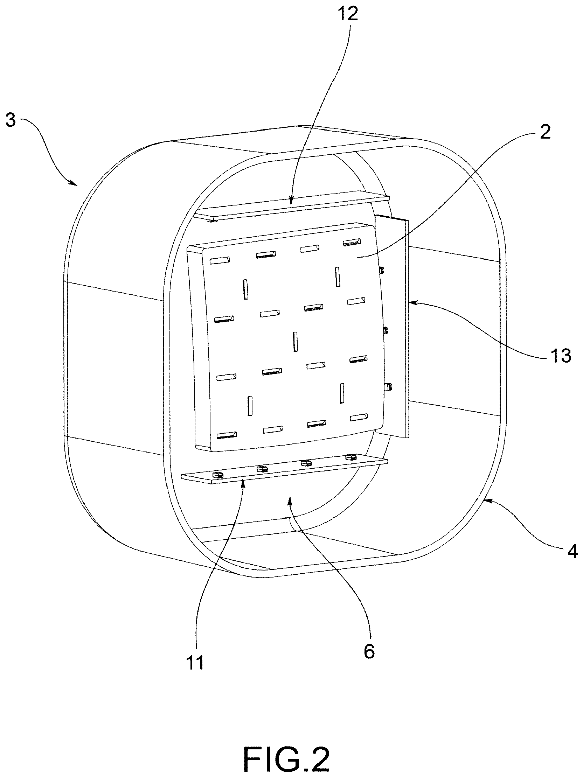

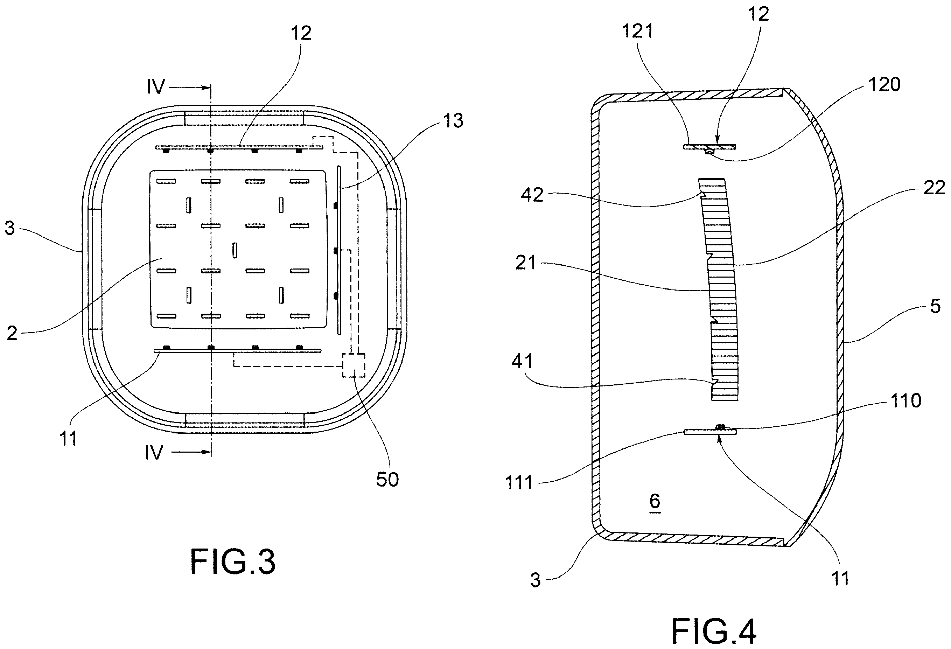

As shown in particular in Figures 2 and 3, the first light source 11 faces a first light inlet surface 31 of the light guide 2 so that the light emitted by the first light source 11 penetrates the light guide 2 through the first light inlet surface 31 and then propagates with a first propagation orientation 01 inside the light guide 2 while keeping the condition of total internal reflection between the light extraction 21 and light emission 22 surfaces of the light guide 2.

The second light source 12 faces a second light inlet surface 32 of the light guide 2 so that the light emitted by the second light source 12 penetrates the light guide 2 through such a second light inlet surface 32 and then propagates with a second propagation orientation O2 inside the light guide 2 while keeping the condition of total internal reflection between the light extraction 21 and light emission 22 surfaces of the light guide 2.

Advantageously, as will be resumed below, device 1 may also comprise more than two light sources, each facing different light inlet surfaces and therefore with different light propagation orientations inside the light guide 2.

Such light sources 11, 12, 13 are configured to be switched on (and therefore emit light) independently of one another.

Preferably, but not exclusively, each light source 11, 12, 13 comprises at least one light-emitting diode 110, 120, 130 (LED) and an electronic support and supply board 111, 121, 131.

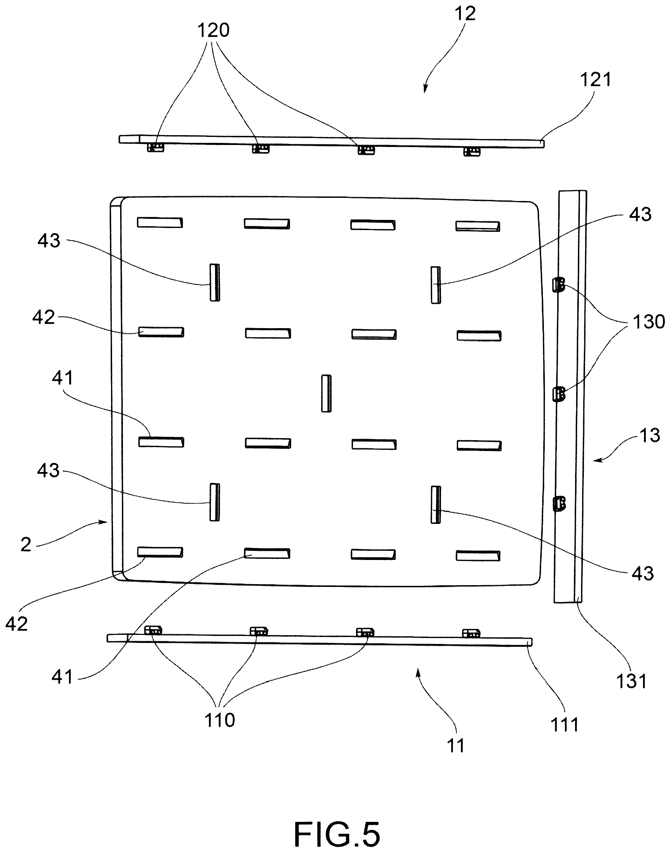

In particular, as shown in particular in Figures 4 and 5, each light source 11, 12, 13 may comprise a plurality of light-emitting diodes 110, 120, 130 (LEDs) associated with the same electronic support and supply board 111, 121, 131.

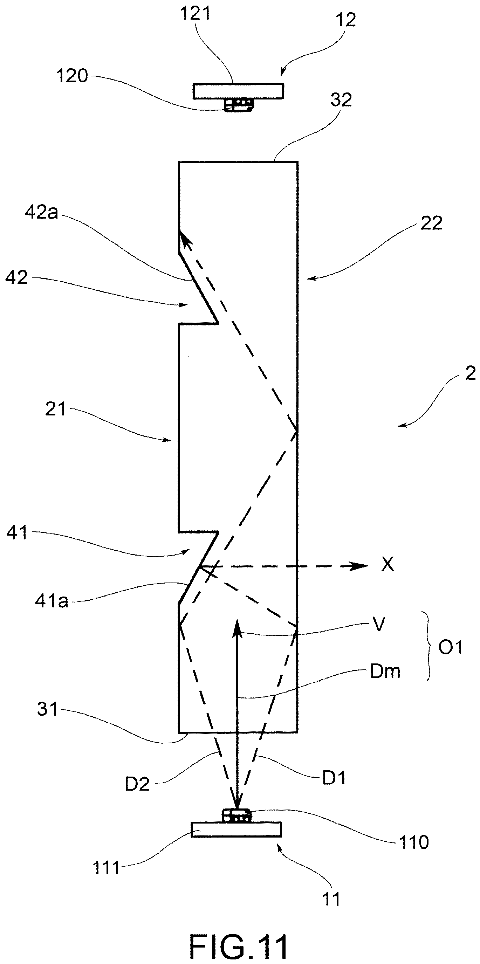

The propagation orientation O of the light emitted by a light source is defined by the average propagation direction of the light emitted by such a light source inside the light guide plate and by the propagation direction of the light along said average direction. The average propagation direction is defined by the average of all the directions included in the limit angle of reflection of the light guide. This is diagrammatically depicted in Figure 11, where the average direction is indicated by DM, the propagation direction by V and two examples of directions included within the limit angle of reflection are indicated by D1 and D2.

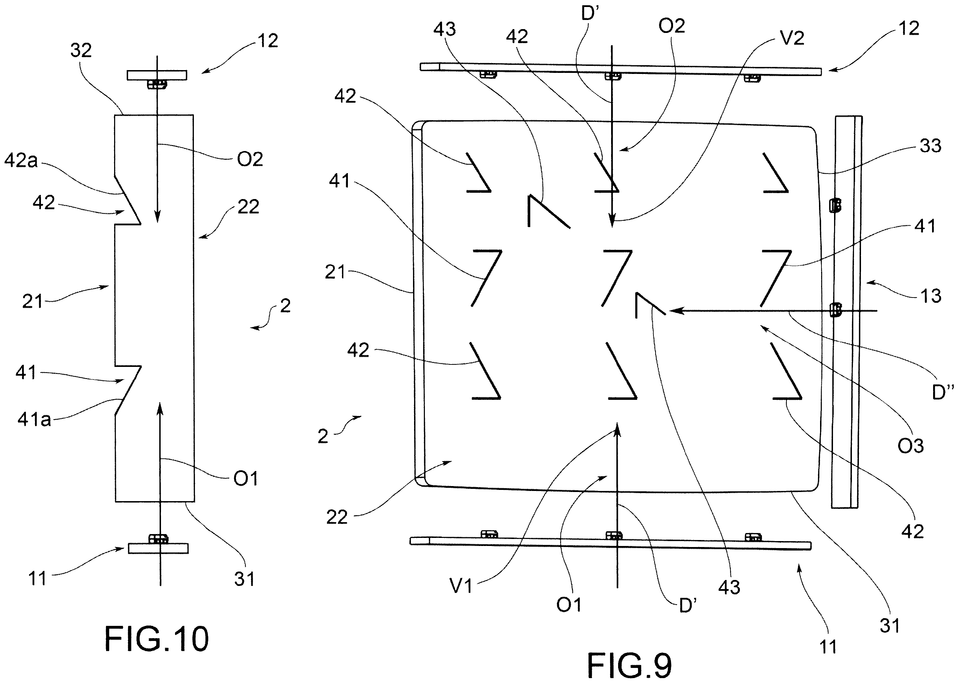

The propagation orientation 01, O2, O3 of the light emitted by a light source 11, 12, 13 depends on the position taken by the respective light inlet surface 31, 32, 33 in the light guide 2, which is faced by the light source. The propagation orientation of the light inside the light guide changes depending on the inlet surface from which the light originates. Reference is made to the drawings in Figures 9 and 10 to clarify such a concept. In greater detail, the light guide in Figure 9 is depicted as a quadrangular light plate, and three different light sources 11, 12 and 13 are provided, each consisting of an LED array. The light emitted by a first light source 11 comes from a first inlet surface 31, while the light emitted by a second light source 12 comes from a second inlet surface 32. The first and second inlet surfaces 31 and 32 are defined by two opposite side edges of the light plate 2. Therefore, the light emitted by such two light sources 11 and 12 has the same average propagation direction D' but opposite directions VI and V2. Therefore, the result is different propagation orientations O1 and O2. The light emitted by the third light source 13 instead comes from a third inlet surface 33 which is defined by a side edge of the light plate 2, orthogonal to the other two edges. Therefore, the light emitted by such a third light source 13 has a different average propagation direction D" and therefore also a different propagation orientation O3.

According to the aforesaid general embodiment of the present invention, the light extraction surface 21 of the light guide comprises:
- at least a first plurality of light extractors 41 (hereinafter also referred to as first light extractors 41), each of which is configured to extract, from the aforesaid light guide 2, substantially only light having the first propagation orientation 01; and
- at least a second plurality of light extractors 42 (hereinafter also referred to as second light extractors 42), each of which is configured to extract, from the aforesaid light guide 2, substantially only light having the second propagation orientation O2.

In other words, the first light extractors 41 are configured to extract light emitted by the first light source 11 from the light guide 2 and not to extract light emitted by the second light source 12 and possibly by other light sources 13, when provided.

Similarly, the second light extractors 42 are configured to extract light emitted by the second light source 12 from the light guide 2 and not to extract light emitted by the first light source 11 and possibly by other light sources 13, when provided.

According to the aforesaid general embodiment of the present invention, the lighting and/or signaling device 1 comprises a control unit 50 configured to control the first light source 11 and the second light source 12 independently of each other according to predetermined switch-on sequences.

Preferably, such a control unit 50 consists of a microcontroller.

According to the invention, due to the fact that the light emitted by each light source 11, 12 and 13 is characterized by a specific propagation orientation inside the light guide, the sequential switching on of the light sources causes a selective "activation" of the light extraction surface according to the surface distribution of the first and second light extractors. Such a selective activation is transmitted onto the light emission surface of the light guide, thus generating an animated lighting effect in device 1.

With respect to the known solutions, it is therefore possible to obtain animated lighting effects also using a single light guide, due to the device 1 according to the invention. The use of a single light guide allows a simpler construction of the device, thus avoiding disadvantages in terms of increase in weights and volumes.

Advantageously, again using a device 1 according to the invention with a single light guide, it is possible to increase the complexity of the obtainable animated lighting effect by increasing the number of the light sources and at the same time by associating a specific light inlet surface and also specific light extractors with each light source.

Advantageously, the first plurality of light extractors 41 and the second plurality of light extractors 42 are distributed over first and second portions 21a and 21b, respectively, of the light extraction surface 21 of the light guide 2, according to predefined geometrical patterns, which are selected in the designing and dimensioning step according to the light patterns to be obtained.

The first and second portions 21a and 21b of the light extraction surface may be separated from each other or may at least partially intersect each other.

If more than two pluralities of light extractors which may be "activated" with specific propagation orientations are provided, each of said further pluralities of extractors 41, 42 and 43 is distributed over different portions 21a, 21b and 21c of the light extraction surface 21 of the light guide 2.

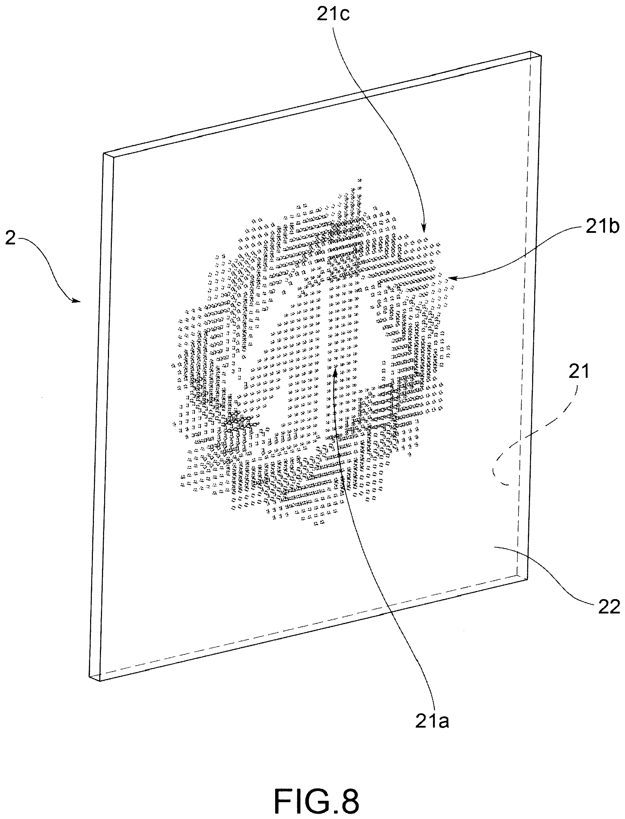

An example of optical pattern which may be obtained on the emitting surface of the light guide of a lighting/signaling device for vehicles according to the invention is shown in Figure 8. In greater detail, such an optical pattern is obtained by means of three different pluralities of light extractors distributed over three different portions 21a, 21b and 21c of the light extraction surface 21. Such portions are partially separated and partially intersect one another.

According to a preferred embodiment shown in the accompanying drawings, the light guide 2 comprises three or more different light inlet surfaces 31, 32, 33.

Again according to such a preferred embodiment, the lighting and/or signaling device 1 comprises:
- three or more light sources 11, 12, 13, each of which faces a different light inlet surface 31, 32, 33 so that the light emitted by each of such light sources 11, 12, 13 penetrates the light guide 2 through a respective light inlet surface 31, 32, 33 and propagates with a specific propagation orientation O1, O2, O3 inside the light guide 2 while keeping the condition of total internal reflection between the light extraction surface 21 and the light emission surface 22 of the light guide 2, and
- three or more pluralities of light extractors 41, 42, 43 arranged on the light extraction surface 21, each plurality of extractors 41, 42, 43 being configured to extract, from the light guide 2, only light having a specific propagation orientation O1, O2, 03.
According to the invention, such three or more light sources 11, 12, 13 are configured to be switched on independently of one another. The control unit 50 is configured to control such three or more light sources 11, 12, 13 independently of one another according to predetermined switch-on sequences so as to generate an animated lighting effect on such a light emission surface 22.

Preferably, as diagrammatically shown in Figures 9, 10 and 11, each light extractor 41, 42, and 43 is provided with at least one inclined wall 41a, 42a which overhangingly protrudes from the light extraction surface 21 and is suitable to deflect light having a predefined propagation orientation O1, O2, O3 outside the light guide. Operatively, a light beam (with predefined propagation orientation) deflected by such an inclined surface no longer satisfies the condition of total internal reflection of the light guide and therefore may exit the latter.

The deflection imposed by the aforesaid inclined surface 41a, 42a may be according to a predefined light direction X or according to a plurality of directions (scattering) .

Preferably, but not exclusively, the light extractors 41, 42 and 43 consists of prisms, in particular with triangular or trapezoidal cross section.

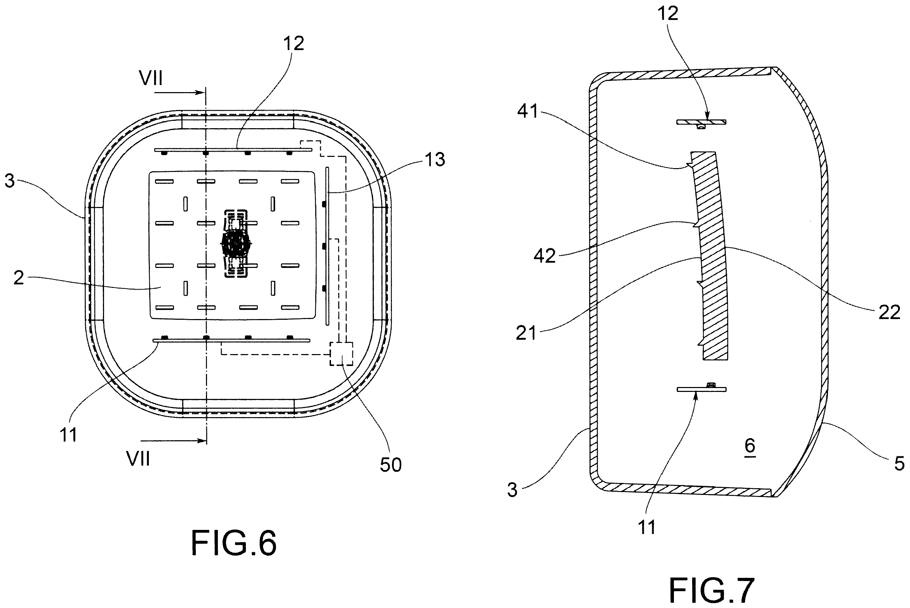

Preferably, the prisms 41, 42, 43 may consist of incisions in the light extraction surface 21, as shown in Figures 4, 10 and 11. Alternatively, the prisms may consist of protruding elements from such an extraction surface 21, as shown in Figure 7.

The light guide 2 is typically made of polymeric material and is shaped so as to transmit light beams therein in a known manner, by means of successive reflections according to a condition of total internal reflection (TIR).

Preferably, as shown in the accompanying drawings, the light guide 2 consists of a light guide plate.

In greater detail, the light extraction surface 21 consists of a first face of such a plate, while the light emission surface 22 consists of a second face of said plate, opposite to the first face. The light inlet surfaces 31, 32, 33 each consist of a side edge of said plate 2, i.e. the surface that extends into the thickness of the guide plate 2.

Preferably, the plate 2 is polygonal in shape, e.g. triangular, square, rectangular, hexagonal, octagonal. Thereby, each side edge of such a polygonal shape may constitute a light inlet surface of the light guide.

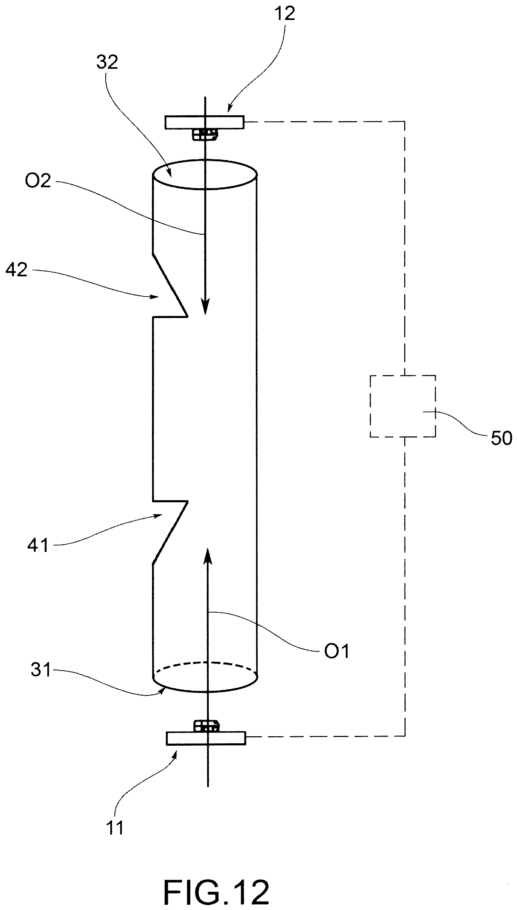

According to an embodiment shown in Figure 12, the light guide may consist of a light guide rod.

In greater detail, the light extraction surface consists of a first portion of the longitudinal surface of the rod, while the light emission surface consists of a second portion of the longitudinal surface of the rod. The light inlet surfaces 31 and 32 are arranged at the ends of the rod and face respective light sources 11 and 12. In the case in hand, the light extraction surface comprises a first plurality of light extractors 41 and a second plurality of light extractors 42 associated with the first and second light sources 11 and 12, respectively, which may be activated independently of each other by the control unit 50.

Preferably, as shown in the accompanying drawings, the lighting and/or signaling device 1 for vehicles according to the invention defines a (rear or front) automotive light.

As already specified above, the device 1 according to the invention may also define devices intended to be installed inside the vehicle, such as for example map lights or a light of an instrument cluster.

In the preferred case in which the lighting and/or signaling device 1 is a (rear or front) automotive light, it comprises at least one external light of the vehicle serving the function of lighting and/or signaling towards the outside of the vehicle, such as for example a position light, a turn signal light, a stop light, a rear fog light, a reverse light, a dipped-beam light, a high beam light and the like.

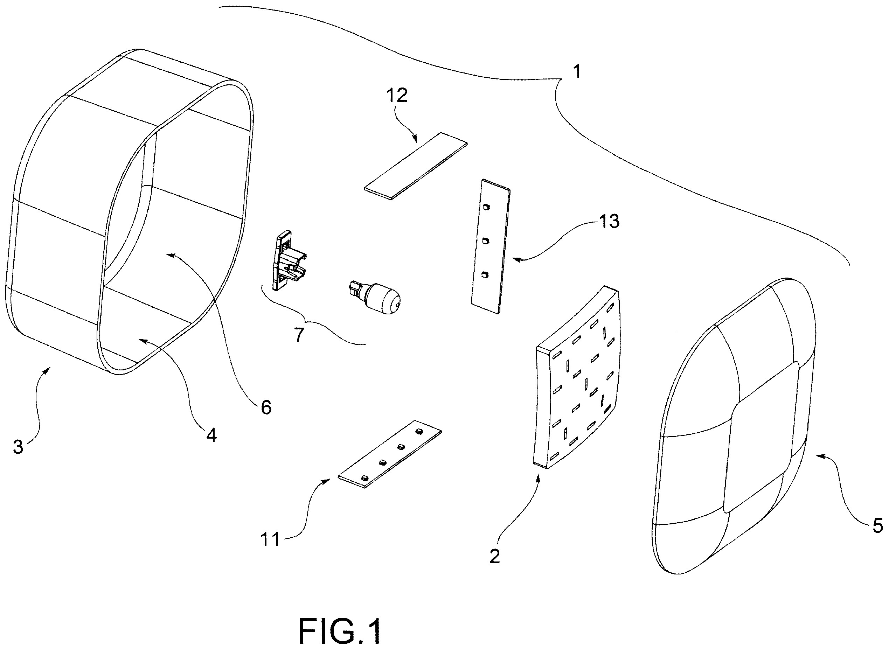

In greater detail, as shown in particular in Figure 1, device 1 may comprise a container body 3 and an at least partially transparent and/or translucent lens body 5.

The container body 3 (usually made of polymeric material) is suitable for being installed in a body of a vehicle and is provided with an opening 4. Typically, the container body 3 allows device 1 (automotive light) to be fastened to the related vehicle.

For the purposes of the present invention, the container body 3 may have any shape and size, and also positioning in the vehicle.

The aforesaid lens body 5 is coupled to the container body 3 in order to close the aforesaid opening 4 so as to emerge from the body of the vehicle and form a housing chamber 6. The latter accommodates the aforesaid light sources 11, 12, 13 and the light guide 2 which faces the lens body (5) so as to be seen therethrough the latter.

The container body 8 may accommodate, in the aforesaid housing chamber 6, intermediate support elements (not shown in the accompanying drawings) for supporting various optical and/or electronic components inside the automotive light in a known manner.

For the purposes of the present invention, the lens body 5 may be external so as to define at least an outer wall of the automotive light directly subjected to the atmosphere.

The lens body 5 may also be provided inside a motor vehicle so as to be accommodated inside the passenger compartment of the motor vehicle; this is the case, for example, of a map light or a part of a dashboard of a motor vehicle.

As already mentioned, the lens body 5 closes the housing chamber 6 and is suitable for being travelled by the light beams generated by the light sources 11, 12, 13.

In this respect, the lens body 5 is made of a material which is at least partially transparent or semitransparent or translucent, and may also include one or more opaque portions, in any case so as to allow the at least partial crossing of one or more light beams emitted by said light sources 11, 12 and 13.

According to possible embodiments, the material of the lens body 5 is a resin such as PMMA, PC and the like.

According to an embodiment shown in Figure 1, the lighting and/or signaling device for vehicles may comprise at least one additional light source 7 which is arranged inside the aforesaid housing chamber 6 so that the light emitted therefrom crosses the light guide 2 before crossing the aforesaid lens body 5.

Advantageously, device 1 may comprise a reflector (not shown in the accompanying drawings) suitable to reflect the light generated by the aforesaid additional light source 7 towards the lens body 5.

As may be appreciated from the above description, the present invention allows to overcome the previously pointed out drawbacks in the known art.

In particular, the lighting and/or signaling device for vehicles according to the invention allows animated lighting effects to be obtained by also using a single light guide and without using moving parts.

With respect to similar solutions of the known art with several light guides, the technical effect (animated lighting effects) obtained being equal, the use of a single light guide allows a simpler construction of the device, thus avoiding disadvantages in terms of increase in weights and volumes.

Due to the invention it is thus possible to obtain animated lighting effects by means of a lighting and/or signaling device by sequentially switching on the light sources faced the light guide. Therefore, from an operating point of view, the device 1 according to the invention is easy to be managed by means of a control unit, consisting of a microcontroller, for example.

Advantageously, again using a device 1 according to the invention with a single light guide, it is possible to increase the complexity of the obtainable animated lighting effect by increasing the number of the light sources and at the same time by associating a specific light inlet surface and also specific light extractors with each light source.

Those skilled in the art, aiming at meeting contingent and specific needs, can make several changes and variations to the automotive lights described above, all falling within the scope of the invention, which is defined by the following claims.

For example, those skilled in the art could make the light extractors on the light emission surface. In this case, the emitting surface and the extraction surface would coincide.

In this case, the lighting and/or signaling device 1 for motor vehicles, comprises:
- at least one light guide 2 having a light extraction surface 21;
- at least a first 11 and a second 12 light source which are structured so as to emit light when supplied with electric energy.
The first light source 11 faces a first light inlet surface 31 of the light guide so that the light emitted by said first light source 11 penetrates said light guide 2 through said first light inlet surface 31 and then propagates with a first propagation orientation 01 inside the light guide 2 while keeping the condition of total internal reflection between the light extraction surface 21 and an opposite surface of the guide.
The second light source 12 faces a second light inlet surface 32 of the light guide 2 so that the light emitted by said second light source 12 penetrates said light guide 2 through said second light inlet surface 32 and then propagates with a second propagation orientation O2 inside the light guide 2 while keeping the condition of total internal reflection between the light extraction surface 21 and the aforesaid opposite surface of the guide.
The light extraction surface 21 comprises:
- at least a first plurality of light extractors 41, each of which is configured to extract, from said light guide 2, only light having said first propagation orientation 01, and
- at least a second plurality of light extractors 42, each of which is configured to extract, from said light guide 2, only light having said second propagation orientation
The aforesaid at least two light sources 11, 12 are configured to be switched on independently of each other. The lighting and/or signaling device 1 comprises a control unit 50 configured to control the first light source 11 and the second light source 12 independently of each other according to predetermined switch-on sequences so as to generate an animated lighting effect on said light extraction surface 21, the light extraction surface 21 becoming a light emission surface of the light guide 2.

## Claims

1. A lighting and/or signaling device (1) for motor vehicles, comprising:
- at least one light guide (2) having a light extraction surface (21) and a light emission surface (22);
- at least a first (11) and a second (12) light source which are structured so as to emit light when supplied with electric energy,
**characterized in that** said first light source (11) faces a first light inlet surface (31) of the light guide so that the light emitted by said first light source (11) penetrates said light guide (2) through said first light inlet surface (31) and then propagates with a first propagation orientation (01) inside the light guide (2) while keeping the condition of total internal reflection between the light emission and light extraction surfaces (21, 22) of the light guide (2), and
**in that** said second light source (12) faces a second light inlet surface (32) of the light guide (2) so that the light emitted by said second light source (12) penetrates said light guide (2) through said second light inlet surface (32) and then propagates with a second propagation orientation (O2) inside the light guide (2) while keeping the condition of total internal reflection between the light emission and light extraction surfaces (21, 22) of the light guide (2),
said light extraction surface (21) comprising:
- at least a first plurality of light extractors (41), each of which is configured to extract, from said light guide (2), only light having said first propagation orientation (01), and
- at least a second plurality of light extractors (42), each of which is configured to extract, from said light guide (2), only light having said second propagation orientation (O2),
wherein said at least two light sources (11, 12) are configured to be switched on independently of each other and wherein said lighting and/or signaling device (1) comprises a control unit (50) configured to control the first light source (11) and the second light source (12) independently of each other according to predetermined switch-on sequences so as to generate an animated lighting effect on said light emission surface (22).

2. A device according to claim 1, wherein said first plurality of light extractors (41) and said second plurality of light extractors (42) are distributed over first and second portions of said light extraction surface, respectively, according to predefined geometrical patterns.

3. A device according to claim 2, wherein said first portions and said second portions of said extraction surface at least partially intersect with one another.

4. A device according to one or more of the preceding claims, wherein each of said light extractors (41, 42) is provided with at least one inclined wall (41a, 42a) which overhangingly protrudes from said light extraction surface (21) and is suitable to deflect light having a predefined propagation orientation (O1, O2) outside said light guide.

5. A device according to one or more of the preceding claims, wherein said light extractors (41, 42) consist of prisms.

6. A device according to claim 5, wherein said prisms (41, 42) consist of incisions in said light extraction surface (21) or consist of elements protruding from said extraction surface (21).

7. A device according to claim 5 or 6, wherein said prisms (41, 42) have triangular or trapezoidal cross section.

8. A device according to one or more of the preceding claims, wherein said light guide (2) comprises three or more different light inlet surfaces (31, 32, 33),
and wherein said device (1) comprises:
- three or more light sources (11, 12, 13), each of which faces a different light inlet surface (31, 32, 33) so that the light emitted by each of said light sources (11, 12, 13) penetrates said light guide (2) through a respective light inlet surface (31, 32, 33) and propagates with a specific propagation orientation (01, O2, O3) inside the light guide (2) while keeping the condition of total internal reflection between the light extraction surface (21) and the light emission surface (22) of the light guide (2), and
- three or more pluralities of light extractors (41, 42, 43) arranged on said light extraction surface (21), each plurality of extractors (41, 42, 43) being configured to extract, from said light guide (2), only light having a specific propagation orientation (O1, O2, 03),
wherein said three or more light sources (11, 12, 13) are configured to be switched on independently of one another and wherein said control unit (50) is configured to control three or more light sources (11, 12, 13) independently of one another according to predetermined switch-on sequences so as to generate an animated lighting effect on said light emission surface (22).

9. A device according to one or more of the preceding claims, wherein said light guide (2) consists of a light guide plate and wherein said light extraction surface (21) consists of a first face of said plate, while said light emission surface (22) consists of a second face of said plate, opposite to the first face, each of said light inlet surfaces (31, 32, 33) consisting of a side edge of said plate (2).

10. A device according to claim 9, wherein said plate (2) is polygonal in shape, each side edge of said polygonal shape being able to constitute a light inlet surface of said light guide.

11. A device according to one or more of claims 1 to 8, wherein said light guide consists of a light guide rod and wherein said light extraction surface consists of a first portion of the longitudinal surface of said rod, while said light emission surface consists of a second portion of the longitudinal surface of said rod, said light inlet surfaces being arranged at the ends of said rod.

12. A device according to one or more of the preceding claims, wherein each light source (11, 12, 13) comprises at least one light-emitting diode (110, 120, 130) and an electronic support and supply board (111, 121, 131), preferably each light source (11, 12, 13) comprising a plurality of light-emitting diodes (110, 120, 130) associated with the same electronic support and supply board (111, 121, 131).

13. A device according to one or more of the preceding claims, wherein said control unit (50) consists of a microcontroller.

14. A device according to one or more of the preceding claims, comprising:
- a container body (3) suitable to be installed in a body of a vehicle, said container body (3) being provided with an opening (4), and
- an at least partially transparent and/or translucent lens body (5),
said lens body (5) closing said opening (4) of the container body so as to emerge from said body of the vehicle and form a housing chamber (6) accommodating said light sources (11, 12, 13) and said light guide (2) facing said lens body (5) so as to be seen through the latter.

15. A device according to claim 14, comprising at least one additional light source (7) which is arranged inside said housing chamber (6) so that the light emitted therefrom crosses said light guide (2) before crossing said lens body (5).

16. A device according to claim 15, comprising a reflector (8) suitable to reflect the light generated by said additional light source (7) towards said lens body (5) .

17. A lighting and/or signaling device (1) for motor vehicles, comprising:
- at least one light guide (2) having a light extraction surface (21);
- at least a first (11) and a second (12) light source which are structured so as to emit light when supplied with electric energy,
**characterized in that** said first light source (11) faces a first light inlet surface (31) of the light guide so that the light emitted by said first light source (11) penetrates said light guide (2) through said first light inlet surface (31) and then propagates with a first propagation orientation (01) inside the light guide (2) while keeping the condition of total internal reflection, and
**in that** said second light source (12) faces a second light inlet surface (32) of the light guide (2) so that the light emitted by said second light source (12) penetrates said light guide (2) through said second light inlet surface (32) and then propagates with a second propagation orientation (O2) inside the light guide (2) while keeping the condition of total internal reflection, said light extraction surface (21) comprising:
- at least a first plurality of light extractors (41), each of which is configured to extract, from said light guide (2), only light having said first propagation orientation (01), and
- at least a second plurality of light extractors (42), each of which is configured to extract, from said light guide (2), only light having said second propagation orientation (O2),
wherein said at least two light sources (11, 12) are configured to be switched on independently of each other and wherein said lighting and/or signaling device (1) comprises a control unit (50) configured to control the first light source (11) and the second light source (12) independently of each other according to predetermined switch-on sequences so as to generate an animated lighting effect on said light extraction surface (21), said light extraction surface (21) becoming a light emission surface of the light guide (2).
